# EUROPEAN PATENT SPECIFICATION

(11) **EP 0 578 290 B1**
(45) Date of publication and mention of the grant of the patent: **05.08.1998**
(21) Application number: 93201254.5
(22) Date of filing: 03.05.1993
(51) Int. Cl.: H04N 5/14

(54) **Motion estimation**
Bewegungsschätzung
Evaluation de mouvement

(30) Priority: 06.05.1992 EP 92201274
(43) Date of publication of application: 12.01.1994
(73) Proprietor: Philips Electronics N.V., 5621 BA Eindhoven (NL)
(72) Inventor: De Haan, Gerard, c/o Int. Octrooibureau B.V., NL-5656 AA Eindhoven (NL); Huijgen, Hendrik, c/o Int. Octrooibureau B.V., NL-5656 AA Eindhoven (NL)
(74) Representative: Steenbeek, Leonardus Johannes

(56) References cited:
- EP-A- 0 364 748
- EP-A- 0 412 003
- EP-A- 0 466 981
- EP-A- 0 474 276
- US-A- 4 460 923
- US-A- 4 670 851
- SIGNAL PROCESSING vol. 26, no. 3, March 1992, AMSTERDAM (NL) pages 265 - 283 HSING-HSIUNG CHEN ET AL. 'Low -rate sequence image coding via vector quantization'

## Description

The present invention relates to a method of and an apparatus for estimating motion vectors, and to a video signal receiver comprising a motion compensated line number conversion circuit.

EP-A-0,474,276 (PHN 13,439) describes a motion estimator in which small increments are added to a prediction vector to obtain a number of candidate vectors from which an output is selected. In this estimator, a first increment in a first direction has a magnitude which is different from a second increment in a second direction. This measure maintains the stability and accuracy of previous estimators, while the convergence speed is increased.

The article "Low-rate sequence image coding via vector quantization", by Chen et al., Signal Processing, Vol. 26, No. 3, 3/92, pp. 265-283, discloses motion compensated interframe coding within the context of a vector quantization image coding system. In this coding scheme, the direction of motion of an object is tracked either by a pixel recursive technique or by a block matching technique. In a three stages motion search algorithm, a search error function is first computed without any motion compensation. If the computed search error function value does not exceed a noise threshold, the examined block of pixels is a no change block and no further motion search is performed. In the other case, the search error function is computed for each of the eight blocks surrounding the current block. If the minimum of these computed search error function values does not exceed the noise threshold, the minimum value indicates the motion vector, viz. the vector from the current block to that surrounding block which corresponds to the minimum search error function value. However, if the minimum of the computed search error function values still exceeds the noise threshold, the search error function is computed for the eight blocks surrounding the block corresponding to the minimum value. If the minimum of these computed search error function values does not exceed the noise threshold, the minimum value indicates the motion vector. In the other case, a non-motion-compensated intraframe coding is carried out unless the computed minimum value of the last search step was sufficiently smaller than the computed minimum value of the preceding search step, thus indicating that the motion vector search is progressing towards a satisfactory result. In the latter case, the search error function is calculated for the eight blocks surrounding the block corresponding to the latest calculated minimum search error function value in the hope that the minimum of the now calculated search error function values does not exceed the noise threshold. If so, the motion vector is found; if not, recourse is had to a non-motion-compensated intraframe coding.

It is, *inter alia,* an object of the invention to provide an improved motion estimation. It is a further object of the invention to provide a motion estimation which requires simpler hardware and/or yields better estimation results.

In accordance with a first aspect, the invention provides a motion estimation method as defined in claim 1. In accordance with a second aspect, the invention provides a motion estimation apparatus as defined in claim 7. In accordance with a third aspect, the invention provides a video signal receiver comprising an input circuit for receiving a video signal having a first number of lines per second, and a line number conversion circuit coupled to the input circuit for furnishing an output video signal having an increased number of lines per second, the line number conversion circuit comprising a motion estimation apparatus for furnishing motion vectors and a motion compensated interpolation circuit for furnishing the output video signal in dependence on the motion vectors, the motion estimation apparatus comprising means for furnishing a prediction vector, and characterized by means for pseudo-randomly selecting an update vector from an update vector set, and means for adding the pseudo-randomly selected update vector to the prediction vector obtain a new vector. Very simple and advantageous embodiments of the invention are defined in the dependent claims.

If an update vector having a seemingly random magnitude and direction is selected from an update vector set comprising several update vectors of varying magnitudes and directions, the estimation quality obtained when using only one or a very small number of update vectors is comparable to the estimation quality obtained when using a plurality of update vectors of differing magnitudes and directions as in the prior art. Surprisingly, the use of only one pseudo-random update vector appeared to yield better motion vectors than the use of several "fixed" update vectors. It will be evident that the use of one or a very small number of update vectors provides the possibility of a simpler hardware implementation.

These and other aspects of the invention will be apparent from and elucidated with reference to the embodiments described hereinafter.

In the drawing:

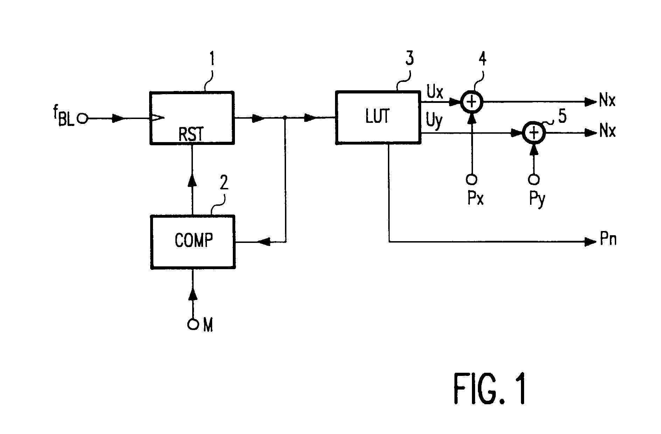

Fig. 1 illustrates an embodiment of a motion estimator in accordance with the present invention.

In Fig. 1, a signal of the pixel block frequency f_{BL}, *i.e.* a signal which occurs once for each block of pixels in the picture, is applied to a clock input of a counter 1. The count output is connected to a comparator 2 and to an address input of a look-up table read-only memory (LUT) 3. The LUT 3 includes the horizontal components Ux and the vertical components Uy of M possible update vectors. The comparator 2 compares the output of the counter 1 to the number M and resets the counter 1 when its output reaches M. The update vector components Ux, Uy indicated by the counter output are applied to adders 4, 5 in which they are added to prediction vector components Px, Py. The adders 4, 5 supply new vector components Nx, Ny.

When this new vector (Nx, Ny) is used as a candidate vector whose estimation error is compared to that of other candidate vectors in further parts (not shown) of the motion estimator, the LUT 3 may further supply a penalty value Pn corresponding to the new vector (Nx,Ny). A motion estimation in which estimation errors of several candidate vectors are augmented by respective penalty values before selecting the candidate vector having the lowest estimation error is known *per se* from EP-A-0,474,276. Another simple method of obtaining the penalty value Pn starts from the summed lengths of the update vector components. Preferred other candidate vectors are the zero vector, the prediction vector (Px,Py) itself, and a vector estimated during a previous field period for a second adjacent block.

If two vector estimators are used in parallel, as described in detail in EP-A-0,415,491 (PHN 13,068), the updates supplied by the LUTs of these two estimators are preferably different from each other.

The LUT 3 preferably comprises the update vectors (0,1), (0,-1), (0,2), (0,-2), (1,0), (-1,0), (3,0) and (-3,0), so that M equals 8. The order of the update vectors in the LUT 3 may be chosen at will , but should be read out in a pseudo-random order. If desired, some of the update vectors may appear several times in the LUT 3. Anyhow, addressing LUT 3 by the counter 1 yields a cyclic selection of one update vector from the set of possible update vectors. The length of this cycle may be chosen such that a non-integral multiple of the cycle length corresponds to the number of blocks in the horizontal and vertical directions; alternatively, an integral multiple may be chosen.

Sub-pixel accuracy of the motion estimation can be achieved in a very simple and efficient manner by including in the update vector set both integer update vectors and non-integer update vectors, where non-integer update vectors are update vectors having at least one non-integer update vector component Ux, Uy.

Further details about a motion estimator arrangement in which the present embodiment is preferably used to furnish one of the candidate vectors from which the output vector is selected are described in detail in EP-A-0,415,491 and EP-A-0,474,276, so that these details need not be described in this application.

Although the above-described look-up table is very advantageous because of its simplicity, it should be noted that any other means for generating a pseudo-random update vector from a set of permitted update vectors are suitable. Those skilled in the art will be able to design many alternatives to the embodiments described hereinbefore without departing from the scope of the invention as defined in the following claims.

## Claims

1. A method of estimating motion vectors, comprising the step of:
furnishing a prediction vector (Px,Py); and characterized by the steps of:
pseudo-randomly selecting (3) an update vector (Ux,Uy) from an update vector set; and
adding (4, 5) said pseudo-randomly selected update vector (Ux,Uy) to said prediction vector (Px,Py) to obtain a new vector (Nx,Ny).

2. A method as claimed in claim 1, wherein said selecting step (3) includes a selection in a predetermined cyclic order.

3. A method as claimed in claim 2, wherein said selection includes a sequential reading of update vector components from a look-up table (3), where for each new vector (Nx, Ny), one set (Ux,Uy) of update vector components is read for each block of pixels.

4. A method as claimed in claim 3, wherein said look-up table (3) furnishes penalty values (Pn) corresponding to the pseudo-randomly selected update vectors (Ux,Uy), said motion vectors being estimated by selecting, from at least two candidate vectors each having an estimation error to which a penalty value (Pn) is added, that candidate vector which has a minimum sum of estimation error and penalty value (Pn), the new vector (Nx, Ny) being one of the candidate vectors, and the penalty values preferably being obtained in dependence upon a summed length of the update vector components (Ux,Uy).

5. A method as claimed in claim 1, wherein at least two new vectors (Nx,Ny) are obtained by adding two mutually different pseudo-randomly selected update vectors (Ux,Uy) to two respective prediction vectors (Px,Py).

6. A method as claimed in claim 1, wherein said update vector set (3) includes both integer update vectors and non-integer update vectors, where non-integer update vectors are update vectors having at least one non-integer vector component.

7. A motion estimation apparatus, comprising:
means for furnishing a prediction vector (Px,Py); and characterized by:
means (3) for pseudo-randomly selecting an update vector (Ux,Uy) from an update vector set; and
means (4, 5) for adding said pseudo-randomly selected update vector (Ux,Uy) to said prediction vector (Px,Py) to obtain a new vector (Nx,Ny).

8. A video signal receiver comprising an input circuit for receiving a video signal having a first number of lines per second, and a line number conversion circuit coupled to said input circuit for furnishing an output video signal having an increased number of lines per second, the line number conversion circuit comprising a motion estimation apparatus for furnishing motion vectors and a motion compensated interpolation circuit for furnishing said output video signal in dependence on said motion vectors, said motion estimation apparatus comprising:
means for furnishing a prediction vector (Px,Py); and characterized by:
means (3) for pseudo-randomly selecting an update vector (Ux,Uy) from an update vector set; and
means (4, 5) for adding said pseudo-randomly selected update vector (Ux,Uy) to said prediction vector (Px,Py) to obtain a new vector (Nx,Ny).

## Patentansprüche

1. Verfahren zum Schätzn von Bewegungsvektoren, wobei dieses Verfahren den nachfolgenden Verfahrensschritt umfaßt:
das Liefern eines Prädiktionsvektors (Px, Py); und das gekennzeichnet wird durch die nachfolgenden Verfahrensschritte:
das pseudo-beliebige Selektieren (3) eines Aktualisierungsvektors (Ux, Uy) aus einem Satz von Aktualisierungsvektoren; und
das Addieren (4, 5) des genannten pseudo-beliebig selktierten Aktualisierungsvektors (Ux. Uy) zu dem Prädiktionsvektor (Px, Py) zum Erhalten eines neuen Vektors (Nx, Ny).

2. Verfahren nach Anspruch 1, wobei der genannte Selektionsschritt (3) eine Selektion in einer vorbestimmten zyklischen Reihenfolge umfaßt.

3. Verfahren nach Anspruch 2, wobei die genannte Selektion eine sequenteille Auslese von Aktualisierungsvektorelementen aus einer Verweistabelle (3), wobei für jeden neuen Vektor (Nx, Ny) ein Satz (Ux, Uy) von Aktualisierungsvektorelementen für jeden Pixelblock ausgelesen wird.

4. Verfahren nach Anspruch 3, wobei die genannte Verweistabelle (3) Strafwerte (Pn) liefert entsprechend den pseudo-beliebig selektierten Aktualisierungsvektoren (Ux, Uy), wobei aus den genannten Bewegungsvektoren durch Selektion aus wenistens zwei Kandidatvektoren, die je einen Schätzungsfehler haben, zu dem ein Strafwert (Pn) hinzuaddiert wird, derjenige Kandidatvektor selektiert wird, der eine minimale Summe an Schätzungsfehlern und Strafwerten (Pn) hat, wobei der neue Vektor (Nx, Ny) einer der Kandidatvektoren ist, und wobei die Strafwerte vorzugsweise in Abhängigkeit von einer summierten Länge der Aktualisierungsvektorelementen (Ux. Uy) erhalten werden.

5. Verfahren nach Anspruch 1, wobei wenigstens zwei neue Vektoren (Nx, Ny) durch Addierung zweier untereinander verschiedener pseudo-beliebig selektierter Aktualisierungsvektoren (Ux, Uy) zu zwei betreffenden Prädiktionsvektoren (Px, Py) erhalten werden.

6. Verfahren nach Anspruch 1, wobei der genannte Aktualisierungsvektorensatz (3) ganzzahlige Aktualisierungsvektoren und nicht-ganzzahlige Aktualisierungsvektoren aufweist, wobei die nicht-ganzzahligen Aktualisierungsvektoren Aktualisierungsvektoren sind mit wenigstens einem nicht-ganzzahligen Vektorelement.

7. Bewegungsschätzanordnung mit:
Mitteln zum Liefern eines Prädiktionsvektors (Px, Py); und gekennzeichnet durch:
Mittel (3) zum pseudo-beliebigen Selektieren eines Aktualisierungsvektors (Ux, Uy) aus einem Aktualisierungsvektorensatz; und
Mittel (4, 5) zum Addieren des genannten pseudo-beliebig selektierten Aktualisierungsvektors (Ux, Uy) zu dem genannten Prädiktionsvektor (Px, Py) zum Erhalten eines neuen Vektors (Nx, Ny).

8. Video-Signalempfänger mit einem Eingangskreis zum Empfangen eines Video-Signals mit einer ersten Zeilenzahl je Sekunde und mit einem mit dem Eingangskreis gekoppelten Zeilenzahlwandler zum Liefern eines Ausgangs-Videosignals mit einer größeren Zeilenzahl pro Sekunde, wobei der Zeilenzahlwandler eine Bewegungsschätzanordnung aufweist zum Liefern von Bewegungsvektoren und eine bewegungskompensierte Interpolationsanordnung zum Liefern des Ausgangs-Videosignals in Abhängigkeit von den Bewegungsvektoren, wobei die Bewegungsschätzanordnung Mittel aufweist zum Liefern eines Prädiktionsvektors (Px, Py), und gekennzeichnet ist durch Mittel (3) zum pseudobeliebigen Selektieren eines Aktualisierungsvektors (Ux, Uy) aus einem Satz von Aktualisierungsvektoren, und durch Mittel (4, 5) zum Addieren des pseudobeliebig selektierten Aktualisierungsvektors zu dem Prädiktionsvektor (Px, Py), zum Erhalten eines neuen Vektors (Nx, Ny).

## Revendications

1. Procédé d'évaluation de vecteurs de mouvement comprenant l'étape de:
fournir un vecteur de prédiction (Px, Py) et caractérisé par les étapes de
sélectionner de manière pseudo-aléatoire (3) un vecteur de mise à jour (Ux, Uy) parmi un jeu de vecteurs de mise à jour, et
d'ajouter (4, 5) ledit vecteur de mise à jour sélectionné de manière pseudo-aléatoire (Ux, Uy) audit vecteur de prédiction (Px, Py) afin d'obtenir un nouveau vecteur (Nx, Ny).

2. Procédé suivant la revendication 1, dans lequel ladite étape de sélection (3) inclut une sélection dans un ordre cyclique prédéterminé.

3. Procédé suivant la revendication 2, dans lequel ladite sélection inclut la lecture séquentielle de composantes de vecteur de mise à jour dans une table de consultation (3), dans laquelle, pour chaque nouveau vecteur (Nx, Ny), un jeu de composantes (Ux, Uy) de vecteur de mise à jour est lu pour chaque bloc de pixels.

4. Procédé suivant la revendication 3, dans lequel ladite table de consultation (3) fournit des valeurs de pénalité (Pn) correspondant aux vecteurs de mise à jour sélectionnés de manière pseudo-aléatoire (Ux, Uy), lesdits vecteurs de mouvement étant évalués par sélection, entre au moins deux vecteurs candidats présentant chacun une erreur d'évaluation à laquelle une valeur de pénalité (Pn) est ajoutée, du vecteur candidat qui a la somme minimum de l'erreur d'évaluation et de la valeur de pénalité (Pn), le nouveau vecteur (Nx, Ny) étant un des vecteurs candidats, et les valeurs de pénalité étant de préférence obtenues en fonction d'une longueur totalisée des composantes du vecteur de mise à jour (Ux, Uy).

5. Procédé suivant la revendication 1, dans lequel au moins deux nouveaux vecteurs (Nx, Ny) sont obtenus en additionnant deux vecteurs de mise à jour (Ux, Uy) mutuellement différents sélectionnés de manière pseudo-aléatoire à deux vecteurs de prédiction respectifs (Px, Py).

6. Procédé suivant la revendication 1, dans lequel ledit jeu de vecteurs de mise à jour (3) inclut à la fois des vecteurs de mise à jour entiers et des vecteurs de mise à jour non entiers, les vecteurs de mise à jour non entiers ayant au moins une composante de vecteur non entière.

7. Appareillage d'évaluation de mouvement, comprenant des moyens pour fournir un vecteur de prédiction (Px, Py) et caractérisé par des moyens (3) pour sélectionner de manière pseudo-aléatoire un vecteur de mise à jour (Ux, Uy) parmi un jeu de vecteurs de mise à jour, et par des moyens (4, 5) pour ajouter ledit vecteur de mise à jour (Ux, Uy) sélectionné de manière pseudo-aléatoire audit vecteur de prédiction (Px, Py) afin d'obtenir un nouveau vecteur (Nx, Ny).

8. Récepteur de signaux vidéo comprenant un circuit d'entrée pour réception d'un signal vidéo présentant un premier nombre de lignes par seconde, et un circuit de conversion de nombre de lignes couplé audit circuit d'entrée pour fournir un signal vidéo de sortie présentant un nombre supérieur de lignes par seconde, le circuit de conversion de nombre de lignes comprenant un appareil d'évaluation de mouvement pour fournir des vecteurs de mouvement et un circuit d'interpolation à compensation de mouvement pour fournir ledit signal vidéo de sortie en fonction desdits vecteurs de mouvement, l'appareillage d'évaluation de mouvement comprenant un dispositif pour fournir un vecteur de prédiction (Px, Py), et caractérisé par des moyens (3) pour sélectionner de manière pseudo-aléatoire un vecteur de mise à jour (Ux, Uy) parmi un jeu de vecteurs de mise à jour, et des moyens (4, 5) pour ajouter ledit vecteur de mise à jour (Ux, Uy) sélectionné de manière pseudo-aléatoire au vecteur de prédiction (Px, Py) afin d'obtenir un nouveau vecteur (Nx, Ny).
